# EUROPÄISCHE PATENTSCHRIFT

(11) **EP 2 779 371 B1**
(45) Veröffentlichungstag und Bekanntmachung des Hinweises auf die Patenterteilung: **30.09.2015**
(21) Anmeldenummer: 13158615.8
(22) Anmeldetag: 11.03.2013
(51) Int. Cl.: H02K 5/22, F04D 13/06, E05D 7/10

(54) **Pumpenaggregat**
Pump power unit
Groupe motopompe

(43) Veröffentlichungstag der Anmeldung: 17.09.2014
(73) Patentinhaber: Grundfos Holding A/S, 8850 Bjerringbro (DK)
(72) Erfinder: Danielsen, Carl-Christian, 8550 Ryomgård (DK); Damm, Therkel, 8600 Silkeborg (DK); Olesen, René H., 8381 Tilst (DK); Loader, Carl Edward, 8000 Aarhus C (DK); Boglund, Christian Wind, 8000 Aarhus C (DK)
(74) Vertreter: Patentanwälte Vollmann & Hemmer

(56) Entgegenhaltungen:
- EP-A1- 1 524 752
- EP-A1- 1 947 347
- WO-A1-93/01735
- WO-A2-2007/012758
- AU-A4- 2010 101 384
- CA-A1- 1 227 147
- GB-A- 1 452 604
- US-A- 4 381 063
- US-A1- 2004 123 997

## Beschreibung

Die Erfindung betrifft ein Pumpenaggregat mit einem Klemmenkasten, welcher zumindest einen ersten und einen zweiten Gehäuseteil aufweist, welche über zumindest ein Gelenk schwenkbar miteinander verbunden sind.

EP 1 524 752 A1 offenbar einen Klemmenkasten für ein Pumpenaggregat, welche einen schwenkbaren Deckel aufweist. Der schwenkbare Deckel ist an zwei äußeren Ecken über Gelenke mit einem Unterteil des Klemmenkastens verbunden. Neben der Schwenkbarkeit ist der Deckel aus den Gelenkaufnahmen in dem Unterteil des Klemmenkastens vollständig entnehmbar, was durch eine elastische Verformung der Gelenkaufnahmen ermöglicht wird. Die Entnahme erfolgt dabei in der Weise, dass der Deckel über seine normale Öffnungsstellung hinaus weiter verschwenkt wird, wodurch an dem Deckel angebrachte Gelenkbolzen aus den Gelenkaufnahmen ausgehebelt werden. Dies ist allerdings nicht möglich, wenn kein ausreichender Raum zur Verfügung steht, um den Deckel weit genug aufschwenken zu können. Darüber hinaus sind bei dieser Ausgestaltung zwei voneinander beabstandete Gelenke vorgesehen, was zu einer aufwändigeren Fertigung des Klemmenkasten führt und darüber hinaus das Einsetzen des Deckels in die Gelenke erschwert.

Es ist daher Aufgabe der Erfindung, ein Pumpenaggregat mit einem Klemmenkasten, welcher zwei zueinander schwenkbare Gehäuseteile aufweist, dahingehend zu verbessern, dass die Gelenkverbindung zwischen den beiden Gehäuseteilen effizienter herstellbar und die beiden Gehäuseteile leichter miteinander verbindbar sind.

Diese Aufgabe wird durch ein Pumpenaggregat mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Bei dem erfindungsgemäßen Pumpenaggregat handelt es sich um eine Anordnung bestehend aus einer Pumpe und einem elektrischen Antriebsmotor. Die Pumpe und der Antriebsmotor können dabei in bekannter Weise zu einer Baueinheit miteinander verbunden oder integriert sein. Das Pumpenaggregat ist beispielsweise als Umwälzpumpenaggregat, insbesondere als ein Heizungsumwälzpumpenaggregat für Heizungs- und/oder Klimaanlagen oder für die Wasserversorgung ausgebildet. Das Pumpenaggregat kann gemäß einer bevorzugten Ausführungsform einen nasslaufenden elektrischen Antriebsmotor, d. h. einen elektrischen Antriebsmotor mit einem Spaltrohr aufweisen. Das Pumpenaggregat weist einen Klemmenkasten auf.

Ein solcher Klemmenkasten dient dem elektrischen Anschluss des elektrischen Antriebsmotors und vorzugsweise der Aufnahme elektrischer und elektronischer Bauelemente zur Steuerung bzw. Regelung des elektrischen Antriebsmotors. Ein solcher Klemmkasten kann ein separates Bauteil sein, welches an der Außenseite des Motor- bzw. Statorgehäuses des Pumpenaggregates befestigt ist. So kann der Klemmenkasten beispielsweise radial bzw. umfangsseitig oder an einer Axialseite des Statorgehäuses angebracht sein. Alternativ ist es möglich, dass der Klemmenkasten mit dem Stator- bzw. Motorgehäuse ein integriertes Gehäuse bildet, welches einen Aufnahmeraum für den elektrischen Antriebsmotor, insbesondere dessen Stator, sowie für die erforderlichen elektrischen Anschlüsse und elektronischen Bauelemente aufweist.

Erfindungsgemäß weist der Klemmenkasten zumindest zwei Gehäuseteile, nämlich einen ersten und einen zweiten Gehäuseteil auf. Die Gehäuseteile sind vorzugsweise aus Kunststoff, beispielsweise als Spritzgussteile, ausgebildet. Die beiden Gehäuseteile sind über zumindest ein Gelenk schwenkbar miteinander verbunden. Vorzugsweise sind die Gehäuseteile so angeordnet, dass sie in eine aneinander anliegende Position gebracht werden können, in welcher die Gehäuseteile einen von den Gehäuseteilen gebildeten Innenraum umschließen bzw. verschließen. Ein solcher Innenraum kann ein Elektronikaufnahmeraum sein, in welchem elektrische Anschlüsse oder elektronische Bauteile für die Regelung des Antriebsmotors angeordnet sind. Darüber hinaus können die beiden Gehäuseteile in eine geöffnete Position verschwenkt werden, in welcher sie nicht aneinander anliegen und der gebildete Aufnahmeraum außen offen ist, so dass sein Inneres von außen zugänglich ist. Dies kann beispielsweise zu Montage- oder Wartungszwecken erforderlich sein. Beispielsweise kann das Öffnen des Klemmenkastens durch Auseinanderschwenken der beiden Gehäuseteile erforderlich sein, um elektrische Anschlüsse im Inneren kontaktieren zu können. Dies können beispielsweise Anschlüsse für elektrische Anschluss- oder Steuerleitungen sein, beispielsweise zur Verbindung mit externen Anlagenteilen, wie Sensoren.

Erfindungsgemäß ist das Gelenk zwischen dem ersten und dem zweiten Gehäuseteil so ausgestaltet, dass es in Richtung seiner Schwenkachse eine kleinere Ausdehnung als der Klemmenkasten hat. So das Gelenk in Richtung seiner Schwenkachse erfindungsgemäß eine Ausdehnung, welche weniger als die Hälfte der größten Ausdehnung des Klemmenkastens in derselben Richtung, d. h. einer Richtung parallel zu dieser Schwenkachse entspricht. D. h. erfindungsgemäß werden keine voneinander beabstandeten Gelenkelemente an den entgegengesetzten Enden einer langen Seitenkante eines Klemmenkastendeckels vorgesehen, wie es im bekannten Stand der Technik der Fall war, vielmehr wird die Ausdehnung des Gelenkes in seiner axialen Länge, d. h. in Richtung der Schwenkachse im Vergleich zu der Ausdehnung des Deckels reduziert. Dies ermöglicht es zum einen, das Gelenk bevorzugt als einteiliges Bauteil auszubilden. Zum anderen ermöglicht ein solches Gelenk eine leichtere Montage der beiden Gehäuseteile aneinander, da ein solches Gelenk leichter zusammengefügt werden kann. Eine Verdrehung der beiden Gehäuseteile quer zu der Schwenkachse führt bei kleinerer axialer Länge des Gelenkes zu geringeren Fluchtungsfehlern, so dass das Gelenk bei nicht exakter Ausrichtung der beiden Gehäuseteile zueinander leichter zusammengefügt werden kann.

Darüber hinaus ist die kürzere Ausgestaltung des Gelenkes im Verhältnis zur Gesamtausdehnung des Klemmenkastens in derselben Richtung für den Fall von Vorteil, dass das Gelenk so ausgebildet ist, dass es zusätzlich zur Schwenkbarkeit eine lösbare Trennung der beiden Gehäuseteile ermöglicht. Das hat den Vorteil, dass aufgrund der günstigeren Hebelverhältnisse leichter eine erforderliche Lösekraft auf das Gelenk aufgebracht werden kann, um die beiden Gehäuseteile voneinander außer Eingriff zu bringen. So lässt sich insbesondere leichter eine ausreichende Kraft in anderen Richtungen als der üblichen Schwenkrichtung aufbringen, so dass die beiden Gehäuseteile auch in anderen Richtungen als der üblichen Schwenkrichtung leichter voneinander getrennt werden können.

Ferner ist das Gelenk bezogen auf die größte Ausdehnung des Klemmenkastens in der Richtung parallel zur Schwenkachse des Gelenkes in einem Zentralbereich des Klemmenkastens, vorzugsweise mittig, angeordnet. Dies ermöglicht zum einen eine symmetrische Gestaltung des Klemmenkastens. Zum anderen ermöglicht die symmetrische Ausgestaltung symmetrische Hebelverhältnisse, welche ein Lösen der beiden Gehäuseteile in verschiedenen Richtungen begünstigen.

Weiter bevorzugt hat das Gelenk in Richtung seiner Schwenkachse einer Ausdehnung, welche weniger als einem Drittel und vorzugsweise weniger als einem Viertel der größten Ausdehnung des Klemmenkastens in Richtung parallel zu dieser Schwenkachse entspricht. Vorzugsweise wird ein sehr kurzes Gelenk geschaffen. Eine derart kompakte Gelenkausgestaltung ermöglicht es zum einen, das Gelenk auch an kurzen oder gebogenen Außenflächen des Klemmenkastens problemlos anzuordnen. Zum anderen begünstigt eine solche kurze Gelenkausgestaltung das Zusammenfügen und Trennen der beiden Gehäuseteile voneinander. Wenn die Gehäuseteile an den Außenseiten im Bereich ihrer größten Ausdehnung ergriffen werden, ergeben sich so zum Gelenk hin recht lange Hebel, welche es begünstigen, größere Löse- und Fügekräfte auf das Gelenk auszuüben.

Gemäß einer weiteren bevorzugten Ausführungsform der Erfindung ist das Gelenk an einer Seitenfläche des Klemmenkastens gelegen, welche sich parallel zur Schwenkachse des Gelenkes erstreckt oder das Gelenk ist an einer gekrümmten Seitenfläche derart angeordnet, dass sich die Schwenkachse parallel zu einer Tangente an die Seitenfläche erstreckt. Letzteres bedeutet, dass die Schwenkachse sich selber nach Art einer Tangente an die Seitenfläche erstrecken kann oder aber außen oder innen parallel beabstandet zu einer solchen Tangente angeordnet sein kann. So kann sich die Schwenkachse insbesondere auch sehnenförmig zu der gekrümmten Seitenfläche erstrecken. Die in Richtung der Schwenkachse kurze Ausgestaltung des Gelenkes hat dabei den Vorteil, dass auch bei einer solchen Anordnung das Gelenk in der Nähe der Seitenfläche des Klemmenkastens angeordnet werden kann, ohne im geschlossenen Zustand des Klemmenkastens, wenn der erste und der zweite Gehäuseteil aneinander anliegen, nach außen vorzukragen.

Gemäß einer speziellen Ausführungsform der Erfindung ist das Gelenk derart angeordnet, dass sich seine Schwenkachse zu den Seitenflächen oder Seitenkanten des Klemmenkastens, insbesondere zu allen Seitenkanten gewinkelt erstreckt. D. h. bei dieser Ausgestaltung erstreckt sich die Schwenkachse vorzugsweise nicht parallel zu einer der Kanten- oder Seitenflächen des Klemmenkastens. Insbesondere erstreckt sich die Schwenkachse dabei nicht parallel zu einer der äußeren Seitenkanten des Klemmenkastens in einer Draufsicht auf den Klemmenkasten gesehen. D. h. die beiden Gehäuseteile werden somit bevorzugt nicht um eine ihrer Seitenkanten oder parallel zu diesen Seitenkanten verschwenkt, sondern beispielsweise schräg über eine Ecke. So wird beim Verschwenken ein besonders großer Bereich des Klemmenkastens bei guter Zugänglichkeit geöffnet.

Gemäß einer weiteren speziellen Ausführungsform ist der Klemmenkasten so ausgebildet, dass er sich zu einer Seite oder Seitenkante hin verjüngt, wobei das Gelenk im verjüngten Bereich des Klemmenkastens angeordnet ist. Dabei verjüngt sich der Klemmenkasten, wenn er axial an einem Statorgehäuse angeordnet ist, insbesondere in einer Richtung normal zur Längs- bzw. Drehachse des Pumpenaggregates. Die Schwenkachse des Gelenkes erstreckt sich bevorzugt quer zu der Richtung, in welcher sich der Klemmenkasten verjüngt. So kann der Klemmenkasten in Draufsicht beispielsweise eine trapez- oder tropfenförmige Grundform aufweisen und das Gelenk kann an einer Seite im verjüngten Abschnitt, beispielsweise der kurzen Seitenkante einer trapezförmigen Grundform angeordnet sein. Auch eine solche Anordnung wird erst aufgrund der kurzen axialen Länge des Gelenkes in Richtung seiner Schwenkachse möglich. Insofern ergeben sich größere Freiheiten bei der Gestaltung der Form des Klemmenkastens. Wenn die beiden Gehäuseteile des Klemmenkastens in dem verjüngten Abschnitt aneinander gelenkig angelegt sind, hat dies darüber hinaus noch den Vorteil, dass beim Aufschwenken bzw. Auseinanderklappen der Gehäuseteile der breitere, d. h. nicht verjüngte Teil der Gehäuseteile frei zugänglich wird, sodass der Großteil des Innenraumes des Klemmenkastens so gut zugänglich ist, um dort beispielsweise elektrische Anschlüsse vornehmen zu können.

Das Gelenk weist weiter bevorzugt zumindest einen an dem ersten Gehäuseteil des Klemmenkastens befestigten Gelenkbolzen auf, welcher in zumindest eine Gelenkaufnahme eingreift, welche an dem zweiten Gehäuseteil des Klemmenkastens angeordnet ist. Der Gelenkbolzen ist dabei bevorzugt rotationssymmetrisch zu der Schwenkachse ausgebildet, kann jedoch auch asymmetrisch abweichend von einem kreisförmigen Querschnitt ausgebildet sein, beispielsweise um eine erhöhte Klemmkraft in einer aufgeschwenkten Position im Gelenk zu ermöglichen, welche es verhindert, dass die beiden Gehäuseteile selbsttätig in die aneinander anliegende Position fallen. Die Gelenkbolzen und die Gelenkaufnahmen sind vorzugsweise als Spritzgussteile aus Kunststoff ausgebildet. Die Gelenkaufnahme ist so geformt, dass sie den Gelenkbolzen zu einer Dichtung um die Schwenkachse lagert.

Die Gelenkaufnahme weist vorzugsweise zumindest ein Rastelement auf, welches den Gelenkbolzen lösbar in der Gelenkaufnahme fixiert. Das Rastelement ist selber elastisch verformbar und/oder elastisch gelagert, sodass es den Gelenkbolzen formschlüssig fixieren kann und durch Krafteinwirkung von dem Gelenkbolzen außer Eingriff treten kann, sodass der Gelenkbolzen aus der Gelenkaufnahme entnehmbar ist. Dies ermöglicht es, die beiden Gehäuseteile zusätzlich zu der Schwenkbewegung vollständig voneinander zu trennen, beispielsweise um einen noch besseren freieren Zugang zum Innenraum des Klemmenkastens zu ermöglichen. Darüber hinaus kann es vorteilhaft sein, die beiden Gehäuseteile voneinander zu trennen, wenn aufgrund der Einbaulage des Pumpenaggregates ein vollständiges Aufschwenken nicht möglich ist. Die Gelenkaufnahme mit dem Rastelement ist vorzugsweise aus Kunststoff, insbesondere als Spritzgussteil aus Kunststoff gefertigt. Bei der Ausgestaltung aus Kunststoff ist auch bei einstückiger Ausgestaltung sehr leicht eine erforderliche Elastizität bzw. elastische Bewegbarkeit des Rastelementes realisierbar, welche es ermöglicht, das Gelenk mehrfach rastend in und wieder außer Eingriff zu bringen.

Besonders bevorzugt weist das Gelenk zwei voneinander beabstandete Gelenkbolzen auf, welche jeweils in einer Gelenkaufnahme an dem zweiten Gehäuseteil, vorzugsweise lösbar, fixiert sind. Die zwei Gelenkbolzen können aufgrund der kurzen axialen Ausgestaltung des Gelenkes in Richtung der Schwenkachse dabei dennoch an einem Bauteil ausgebildet sein. Besonders bevorzugt erstrecken sich die Gelenkbolzen ausgehend von einem zentralen Träger- bzw. Halteelement in Richtung der Schwenkachse in entgegengesetzte axiale Richtungen. So bildet das Trägerelement mit den zwei abstehenden Gelenkbolzen eine im Wesentlichen T-förmige Form. Auch die Gelenkaufnahmen für die beiden Gelenkbolzen können vorzugsweise in einem Bauteil ausgebildet bzw. ausgeformt sein. Besonders bevorzugt ist die gesamte Gelenkaufnahme einstückig mit dem zweiten Gehäuseteil aus Kunststoff geformt.

Wenn die Gelenkbolzen in zwei entgegengesetzte Richtungen von einem Trägerelement nach außen vorkragen, hat dies den Vorteil, dass sie ein freies Ende aufweisen können. Dies ist von Vorteil, wenn das Gelenk in einer Richtung quer zur Schwenkachse außer Eingriff gebracht werden soll. So ist es möglich, die beiden Gehäuseteile relativ zueinander um eine Achse, welche sich normal zu der Schwenkachse erstreckt, um einen der beiden Gelenkbolzen zu verschwenken, wobei zunächst der andere Genlenkbolzen aus seiner Gelenkaufnahme außer Eingriff tritt und der erste Gelenkbolzen sich in seiner Gelenkaufnahme zunächst quer zu seiner üblichen Schwenkrichtung dreht und dann von dieser außer Eingriff tritt. Insofern wird es möglich, den ersten Gehäuseteil relativ zu dem zweiten Gehäuseteil quer zur normalen Schwenkachse des Gelenkes zu verschwenken und die Gehäuseteile so voneinander zu trennen.

Gemäß einer besonders bevorzugten Ausführungsform weist der zweite Gehäuseteil zumindest in einem Abschnitt seiner Außenwandung ein inneres Wandungselement und ein von diesem beabstandetes äußeres Wandungselement auf, wobei die Gelenkaufnahme in einem Freiraum zwischen dem Inneren und dem äußeren Wandungselement gelegen ist. Die Wandungselemente sind dabei insbesondere normal zu der Schwenkachse voneinander beabstandet und die Schwenkachse verläuft bevorzugt durch den Freiraum. Der Freiraum ist vorzugsweise dem ersten Gehäuseteil zugewandt geöffnet, sodass durch diese dem ersten Gehäuseteil zugewandte Öffnung der Gelenkteil mit den Gelenkbolzen in den Freiraum, in welchem die Gelenkaufnahme angeordnet ist, eingreifen kann. Die Anordnung der Gelenkaufnahme in einem Freiraum zwischen einem inneren und dem äußeren Wandungselement hat den Vorteil, dass das Gelenk zumindest in geschlossenem Zustand des Klemmenkastens, wenn der erste Gehäuseteil an dem zweiten Gehäuseteil anliegt, im Wesentlichen unsichtbar im Inneren der Außenkontur des Klemmenkastens gelegen ist. Darüber hinaus kann das innere Wandungselement den Innenraum des Klemmenkastens nach außen und auch dem Gelenk hin abdichten.

Vorzugsweise ist ein den zumindest einen Gelenkbolzen in der Gelenkaufnahme fixierendes Rastelement an dem äußeren Wandungselement angeordnet und das äußere Wandungselement ist derart elastisch verformbar ausgebildet, dass durch elastische Verformung des äußeren Wandungselementes das Rastelement von dem Gelenkbolzen außer Eingriff bringbar ist. D. h. so bildet das äußere Wandungselement eine elastische Lagerung des Rastelementes, welches dazu dient, den Gelenkbolzen lösbar in der Gelenkaufnahme zu fixieren. Durch ausreichende Krafteinwirkung auf das Gelenk kann das Gelenk bzw. der Gelenkbolzen so gegen das Rastelement drücken, dass das Rastelement das äußere Wandungselement derart elastisch verformt, dass das Rastelement von dem Gelenkbolzen außer Eingriff tritt und diesen freigibt, sodass dieser aus der Gelenkaufnahme entnommen werden kann. In umgekehrter Richtung kann der Gelenkbolzen unter elastischer Verformung des äußeren Wandungselementes, durch welche das Rastelement die Gelenkaufnahme freigibt, wieder in die Gelenkaufnahme eingesetzt werden.

Um die elastische Verformbarkeit des äußeren Wandungselementes zu begünstigen, weist dieses im Bereich der Gelenkaufnahme, vorzugsweise Ausschnitte oder Durchbrechungen auf, welche eine Bewegung von Abschnitten des äußeren Wandelementes, welche das oder die Rastelemente tragen, ermöglichen oder begünstigen. Insbesondere kann ein solcher Ausschnitt gleichzeitig dazu dienen, die Verschwenkbarkeit eines Gelenkteiles nach außen aus der Außenkontur des Klemmenkastens, d. h. aus der Außenkontur des äußeren Wandungselementes heraus zu ermöglichen. Dieses Gelenkteil kann insbesondere ein Trägerelement sein, welches an dem ersten Gehäuseteil angeordnet ist und den oder die Gelenkbolzen trägt. Der erforderliche Ausschnitt hat dann eine Doppelfunktion, zum einen ermöglicht er die Beweglichkeit des Gelenkes um die Schwenkachse. Zum anderen begünstigt er die Verformbarkeit des äußeren Wandungselementes in dessen Abschnitten, in denen Rastelemente angeordnet sind, um Gelenkbolzen in Gelenkaufnahmen lösbar zu fixieren.

Ein beschriebenes Trägerelement, welches den oder die Gelenkbolzen trägt, kann die Funktion haben, den oder die Gelenkbolzen von der Außenfläche oder Außenkante des ersten Gehäuseteiles, welche dem zweiten Gehäuseteil zugewandt ist, zu beabstandetn, insbesondere in Richtung zu dem zweiten Gehäuseteil hin zu beabstanden. Dies ermöglicht es, das Gelenk und dessen Schwenkachse im Inneren der Gehäusekontur bzw. der Kontur des Klemmenkastens zu platzieren, sodass das Gelenk zumindest im geschlossenen Zustand des Klemmenkastens, wenn die zumindest zwei Gehäuseteile aneinander anliegen, nicht nach außen auskragt. Der oder die Gelenkbolzen sind dabei von der genannten Seite bzw. Kante des ersten Gehäuseteiles zumindest so weit beabstandet, wie die Gelenkaufnahme in dem zweiten Gehäuseteil von der Außenkontur des zweiten Gehäuseteiles nach innen beanstandet ist. So wird sichergestellt, dass beim Aufschwenken des ersten Gehäuseteiles nicht an einer Kante oder Seite des zweiten Gehäuseteils anschlägt, bevor ein gewünschter Öffnungswinkel erreicht ist.

Gemäß einer weiteren bevorzugten Ausführungsform begrenzt das innere Wandungselement einen Elektronikaufnahmeraum des Klemmenkastens und der erste Gehäuseteil ist vorzugsweise gegenüber dem inneren Wandungselement des zweiten Gehäuseteiles abgedichtet. So kann ein nach außen vollständig geschlossener Elektronikaufnahmeraum geschaffen werden, welcher zumindest im Bereich des Gelenkes für das Gelenk keiner Öffnung bedarf. Vielmehr kann das gesamte Gelenk vollständig außerhalb des Elektronikaufnahmeraumes, nämlich außerhalb des inneren Wandungselementes angeordnet werden. Wenn der erste Gehäuseteil den Elektronikaufnahmeraum nach außen verschließt, ist es vorteilhaft, dass zumindest ein Abschnitt des ersten Gehäuseteiles dichtend an dem inneren Wandungselement zur Anlage kommt. Dabei kann gegebenenfalls eine elastische Dichtung zwischengelagert sein.

Gemäß einer besonderen Ausführungsform der Erfindung ist das äußere Wandungselement gekrümmt ausgebildet und das innere Wandungselement erstreckt sich sehnenförmig zu dem äußeren Wandelement. So wird zwischen dem äußeren und dem inneren Wandelement ein Freiraum geschaffen, in welchem das Gelenk bzw. die Gelenkaufnahme angeordnet sein kann. Die Schwenkachse des Gelenkes erstreckt sich dabei vorzugsweise im Wesentlichen parallel zu dem inneren Wandungselement und ebenfalls sehnenförmig zu dem äußeren Wandungselement. Die axiale Länge des Gelenkes in Richtung dieser Schwenkachse ergibt sich dabei bevorzugt im Wesentlichen aus der zur Verfügung stehenden Länge des Freiraumes entlang dem inneren Wandungselement. Der Freiraum hat in Draufsicht im Wesentlichen die Form eines Kreissegmentes, wenn die Krümmung des äußeren Wandungselementes einem Kreisbogen folgt.

Gemäß einer weiteren bevorzugten Ausführungsform weist das Gelenk zumindest einen Gelenkbolzen auf, welcher an einem Tragelement bzw. Trägerelement ausgebildet ist, welches mit dem ersten Gehäuseteil des Klemmenkastens kraft-, form- und/oder stoffschlüssig verbunden ist. Dieses Trägerelement kann ein separates Bauteil seil, welches nachträglich mit dem übrigen ersten Gehäuseteil in genannter Weise verbunden ist. So kann das Trägerelement mit dem ersten Gehäuseteil über eine Rastverbindung verbunden sein, verschraubt sein oder beispielsweise auch verklebt und/oder verschweißt sein. Die mehrteilige Ausgestaltung des ersten Gehäuseteiles mit dem Trägerelement kann fertigungstechnische Vorteile haben, da so beide Teile gegebenenfalls im Spritzguss einfacher hergestellt und entkernt werden können. Darüber hinaus besteht die Möglichkeit, beide Teile beispielsweise in unterschiedlichen Farben aus Kunststoff herzustellen, wobei das Trägerelement in seiner Farbe an die Farbe des zweiten Gehäuseteiles, welches die Gelenkaufnahme aufweist, angepasst sein kann. Dies ist insbesondere dann von Vorteil, wenn das Trägerelement in der Richtung auf das zweite Gehäuseteil hin über die Außenfläche des ersten Gehäuseteiles vorsteht und in einer Ausnehmung an der Außenseite des zweiten Gehäuseteils aufgenommen wird, da so das Trägerelement mit dem Gelenkbolzen farblich an das an die Ausnehmung angrenzende Material angepasst werden kann. Durch das Trägerelement kann, wie vorangehend beschrieben, ein Abstand des Gelenkbolzens oder der Gelenkbolzen quer zur Schwenkachse von der dem zweiten Gehäuseteil zugewandten Außenseite des ersten Gehäuseteils erreicht werden, welcher es ermöglicht, den ersten Gehäuseteil relativ zu dem zweiten Gehäuseteil um die Schwenkachse so nach außen zu verschwenken, dass sich der erste Gehäuseteil stets außerhalb der Außenkontur des zweiten Gehäuseteiles bewegt.

Der erste Gehäuseteil des Klemmenkastens bildet bevorzugt einen Deckel des Klemmenkastens. Der zweite Gehäuseteil kann dann entsprechend ein Klemmenkastenunterteil bilden, wobei "Unterteil" hier nicht bedeutet, dass dieses in jeder Einbaulage stets vertikal unterhalb des Deckels gelegen sein muss. Bevorzugt begrenzt das Klemmenkastenunterteil einen Elektronikaufnahmeraum, in welchem elektrische und/oder elektronische Bauteile angeordnet sind. Zweckmäßigerweise ist das Klemmenkastenunterteil der Gehäuseteil, welcher an das Statorgehäuse des Antriebsmotors angrenzt oder Teil von diesem ist. Das Klemmenkastenunterteil weist eine Öffnung auf, welche durch den den Deckel bildenden ersten Gehäuseteil verschlossen werden kann. Der zweite Gehäuseteil weist dazu vorzugsweise eine Umfangswandung auf, welche sich ausgehend von einem Boden zu dem ersten Gehäuseteil hin erstreckt, wobei der erste Gehäuseteil an einer freien Stirn- bzw. Umfangskante dieser Umfangswandung zur Anlage kommen kann.

Zusätzlich zu dem beschriebenen Gelenk können der erste und der zweite Gehäuseteil weiter bevorzugt über Verbindungselemente, insbesondere Schrauben lösbar aneinander fixiert sein. Solche Verbindungselemente können eine zusätzliche Sicherung bilden, welche ein unbeabsichtigtes Öffnen verhindern. Darüber hinaus können solche Verbindungselemente dafür sorgen, dass eine ausreichende Andruckkraft zwischen den beiden Gehäuseteilen wirkt, beispielsweise um eine zwischenliegende Dichtung in dichter Anlage zu halten. Eine solche Dichtung kann vorzugsweise an eines der Gehäuseteile direkt angegossen sein und dann, wenn die Gehäuseteile aneinander anliegen, an einer gegenüberliegenden Dichtfläche an dem jeweils anderen Gehäuseteil dichtend zur Anlage kommen. Insbesondere kann auch in der Nähe des Gelenkes ein zusätzliches Verbindungselement angeordnet sein, sodass das Gelenk entlastet wird.

Gemäß einer besonderen Ausführungsform weist der Klemmenkasten einen dritten Gehäuseteil auf, welcher, insbesondere über zumindest ein Rastelement lösbar mit dem zweiten Gehäuseteil verbunden ist. Der dritte Gehäuseteil ermöglicht es, in dem Klemmenkasten neben dem beschriebenen Elektronikaufnahmeraum einen weiteren zweiten Elektronikaufnahmeraum bereitzustellen, in welchem elektrische und/oder elektronische Bauteile angeordnet sein können. Dabei kann dieser zweite Elektronikaufnahmeraum so ausgebildet sein, dass er beim Öffnen bzw. Aufschwenken des ersten Gehäuseteiles relativ zu dem zweiten Gehäuseteil im Wesentlichen geschlossen bleibt, sodass in diesem zweiten Elektronikaufnahmeraum insbesondere elektronische Bauteile angeordnet werden können, die auch beim Öffnen des Klemmenkastens durch Verschwenken des ersten Gehäuseteiles nicht frei zugänglich sein sollen und so weiter geschützt im Inneren aufgenommen sind. Die lösbare Verbindung zwischen zweitem und drittem Gehäuseteil ermöglicht es, dennoch auch diesen zweiten Elektronikaufnahmeraum durch Abnehmen des zweiten Gehäuseteiles von dem dritten Gehäuseteil zu öffnen, beispielsweise zu Wartungs- und Reparaturzwecken. So können beispielsweise in dem ersten Elektronikaufnahmeraum, welcher durch das erste Gehäuseteil verschlossen wird, Anschlüsse gelegen sein, welche bei der normalen Inbetriebnahme bzw. Installation des Pumpenaggregates zugänglich sein sollen. Weitere elektronische Bauteile, welche allenfalls zu Wartungs- und Reparaturzwecken zugänglich sein müssen, können jedoch geschützt in einem zweiten Elektronikaufnahmeraum in dem dritten Gehäuseteil angeordnet sein.

Besonders bevorzugt ist zumindest ein lösbares Verbindungselement vorgesehen, welches den ersten, den zweiten und den dritten Gehäuseteil miteinander verbindet. Besonders bevorzugt, handelt es sich dabei um eine Schraube, welche die drei Gehäuseteile durchgreift. So kann eine solche Schraube beispielsweise durch eine Öffnung in dem ersten Gehäuseteil und eine Öffnung in dem zweiten Gehäuseteil hindurchgeführt sein und dann mit einem Gewinde an oder in dem dritten Gehäuseteiles sichernd in Eingriff treten. Auf diese Weise ist es sehr leicht möglich, die drei Gehäuseteile fest miteinander zu verbinden. Insbesondere können über Schrauben auch der zweite und der dritte Gehäuseteil dicht aneinander in Anlage gehalten werden, insbesondere kann eine zwischenliegende Dichtung in dichte Anlage an einer zugehörigen Dichtfläche gehalten werden.

Nachfolgend wird die Erfindung beispielhaft anhand der beigefügten Figuren beschrieben. In diesen zeigt:

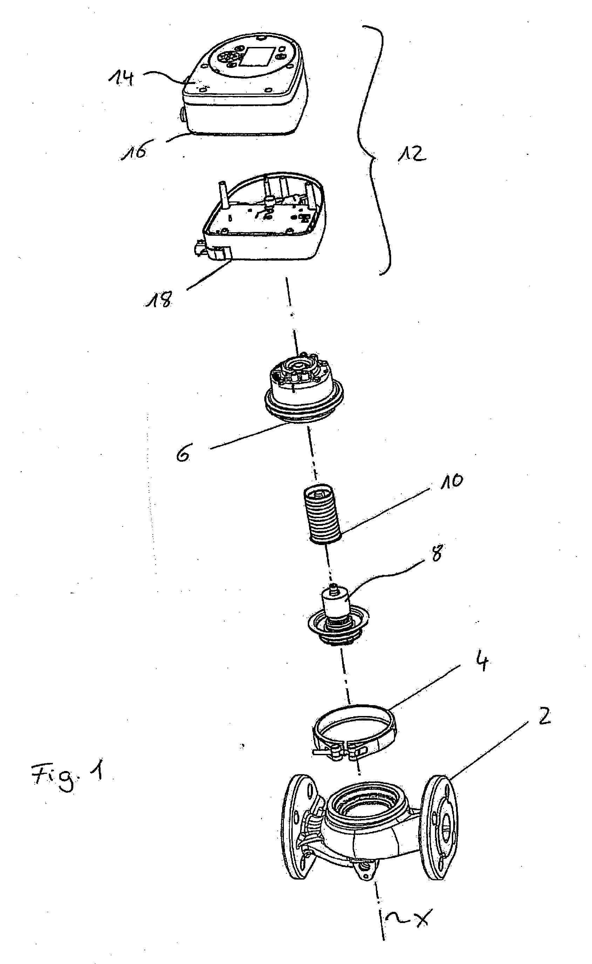

- Fig. 1: eine Explosionsansicht eines erfindungsgemäßen Pumpenaggregates,

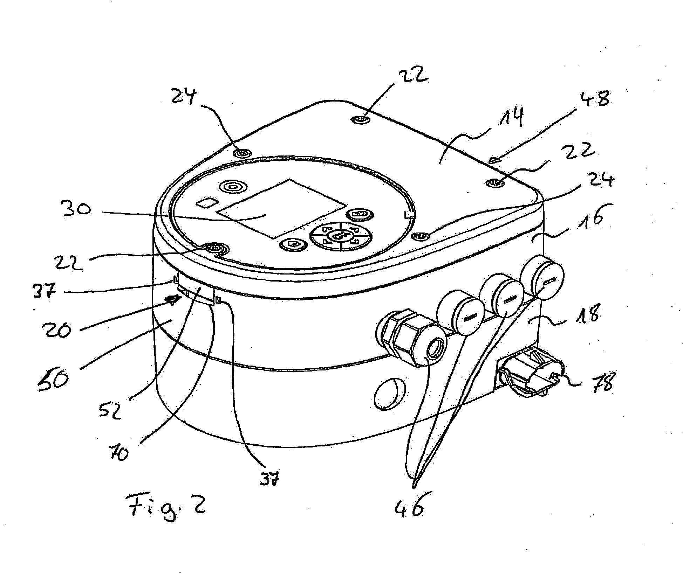

- Fig. 2: eine perspektivisches Ansicht des Klemmenkastens des Pumpenaggregates gemäß Fig. 1,

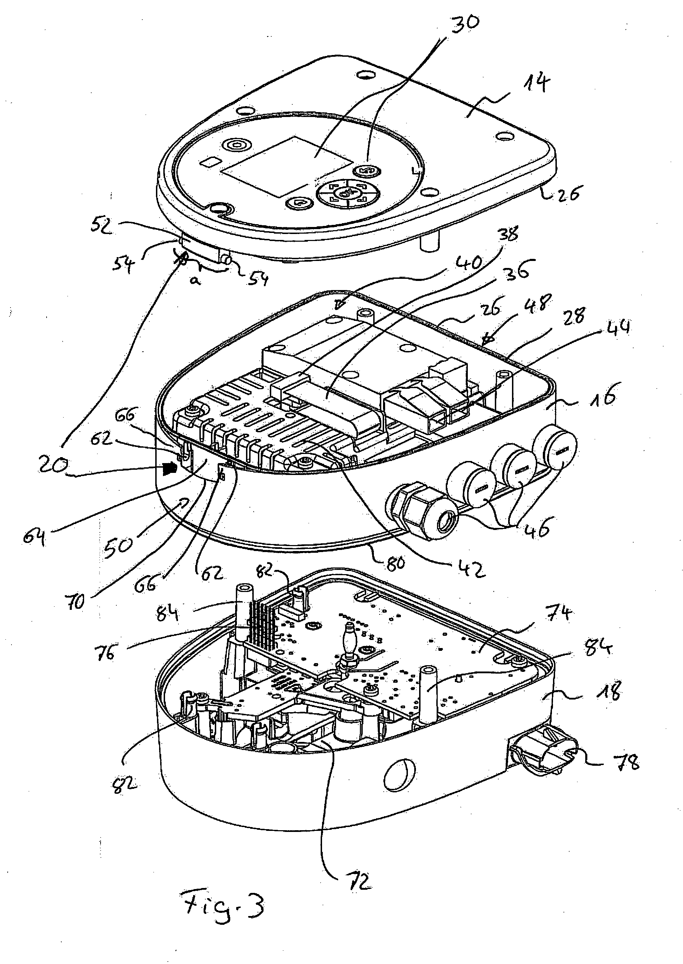

- Fig. 3: eine Explosionsansicht des Klemmenkastens gemäß Fig. 2,
- Fig. 4: eine Draufsicht auf den geschlossenen Klemmenkasten gemäß Fig. 2,
- Fig. 5: einen Klemmenkasten gemäß Fig. 4 mit aufgeklapptem Deckel in Draufsicht,
- Fig. 6: eine perspektivische Ansicht des Klemmenkastens gemäß Fig. 2 bis 5 mit aufgeklapptem Deckel,
- Fig. 7: eine Ansicht des Klemmenkastens gemäß Fig. 6 mit weiter geöffnetem Deckel,
- Fig. 8: eine Ansicht des Klemmenkastens gemäß Fig. 7 mit aus dem Gelenk ausgehaktem Deckel,
- Fig. 9: eine Ansicht des Klemmenkastens gemäß Fig. 2 - 8 mit halb aus dem Gelenk ausgehaktem Deckel,

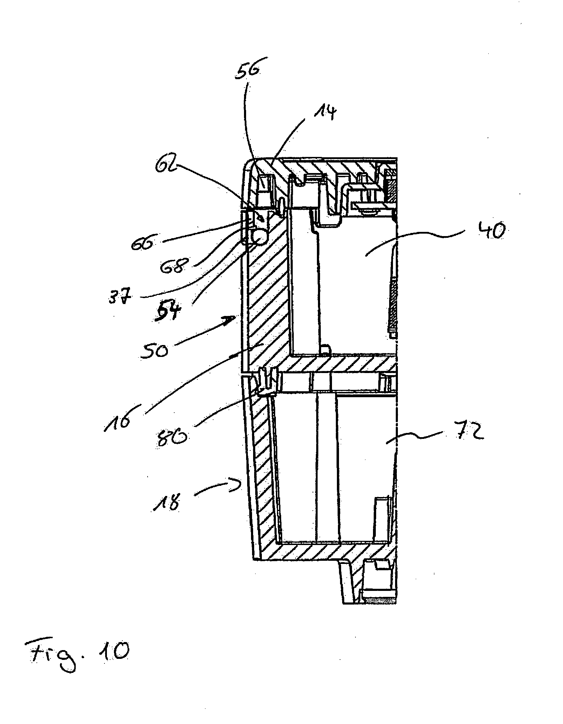

- Fig. 10: eine Schnittansicht entlang der Linie X - X in Fig. 4,
- Fig. 11: eine Schnittansicht entlang der Linie XI - XI in Fig. 5 und
- Fig. 12: eine perspektivische Einzelansicht eines Trägerelementes mit den Gelenkbolzen.

Das in den Beispielen gezeigte erfindungsgemäße Pumpenaggregat weist ein Pumpengehäuse 2 auf, welches mit einem Statorgehäuse 6 in diesem Beispiel über einen Klemmring 4 verbunden ist. Es kann jedoch auch eine andere geeignete Verbindung vorgesehen sein. In dem Statorgehäuse 6 ist ein elektrischer Antriebsmotor mit einem Stator und einem darin angeordneten drehbaren Rotor 8 angeordnet. Zwischen Rotor 8 und Stator ist ein Spaltrohr 10 angeordnet. D. h. es handelt sich um einen nasslaufenden elektrischen Antriebsmotor. Bei dem hier gezeigten Pumpenaggregat handelt es sich um ein Heizungspumpenaggregat. An das dem Pumpengehäuse 2 abgewandte Axialende des Statorgehäuses 6 ist ein Elektronikgehäuse bzw. ein Klemmenkasten 12 angesetzt. Der Klemmenkasten 12 ist in diesem Beispiel aus drei Teilen gebildet, einem ersten Gehäuseteil in Form eines Deckels 14, einem zweiten Gehäuseteil in Form eines Zwischenteiles 16 und einem dritten Gehäuseteil in Form eines Unterteils 18 auf. Der Deckel 14, das Zwischenteil 16 und das Unterteil 18 weisen dieselbe Grundform bzw. denselben Querscnhnitt auf und können so übereinandergesetzt werden. Dabei verschließt der Zwischenteil 16 die offene Oberseite des Unterteils 18 und der Deckel 14 die offene Oberseite des Zwischenteils 16. Es ist zu verstehen, dass auf den Zwischenteil 16 bei geänderter Ausgestaltung des Unterteils 18 verzichtet werden könnte, d. h. der Deckel 14 könnte direkt an dem Unterteil 18 entsprechend zu der nachfolgend für die Verbindung mit dem Zwischenteil 16 beschriebenen Weise angelenkt sein.

Der Deckel 14 ist mit dem Zwischenteil 16 über ein Gelenk 20 schwenkbar verbunden. Zusätzlich ist der Deckel 14 mit dem Zwischenteil 16 über Schrauben 22 und 24 verschraubt. Die Schrauben 22 und 24 bilden Verbindungselemente, welche einer zusätzlichen Sicherung dienen und ein unbeabsichtigtes Aufschwenken des Deckels 14 relativ zu dem Zwischenteil 16 verhindern. Gleichzeitig sorgen die Schrauben 22 und 24 dafür, dass der Deckel 14 in dichter Anlage mit dem Zwischenteil 16 und insbesondere eine an der Stirnkante des Deckels 14, welche dem Zwischenteil 16 zugewandt ist, ausgebildeten Dichtung 26 gehalten wird. Die Schrauben sorgen dabei für die ausreichende Andruckkraft, um die Dichtung 26 in Anlage mit einer gegenüberliegenden Dichtfläche 28 an dem Deckel 14 zu halten, ohne dass das Gelenk 20 von der Andruckkraft belastet wird. Um eine gleichmäßige Andruckkraft zu erhalten, ist eine der Schrauben 22 in der Nähe des Gelenkes 20 angeordnet. So sind die Schrauben 22 und 24 im Wesentlichen gleichmäßig über den Außenumfangs des Deckels 14 verteilt.

An dem Deckel 14 sind Bedien- und Anzeigeelemente 30 angeordnet. Zu deren Kontaktierung ist an der Innenseite des Deckels 14, welche dem Zwischenteil 16 zugewandt ist, eine Leiterplatte 32 angeordnet. An der Leiterplatte 32 ist ein Stecker 34 angeordnet, an welchem ein Verbindungskabel 36 über einen korrespondierenden Verbindungsstecker 38 angeschlossen werden kann.

Der Zwischenteil 16 umschließt bzw. begrenzt einen ersten Elektronikaufnahmeraum 40. In dem ersten Elektronikaufnahmeraum 40 sind Elektronikkomponenten 42 und Anschlussklemmen 44 angeordnet. Die Elektronikkomponenten sind über das Verbindungskabel 36 in der beschriebenen Weise mit der Leiterplatte 32 im Deckel 14 verbunden. Die Anschlussklemmen 44 dienen dazu, externe Komponenten, wie beispielsweise Sensoren mit der Steuerelektronik im Inneren des Klemmenkastens zu verbinden. Dazu können Kabel durch die Kabeldurchführungen 46 in einer Seitenwandung des Zwischenteiles 16 in das Innere des Elektronikaufnahmeraumes 40 geführt werden. In dem hier gezeigten Beispiel sind drei der Kabeldurchführungen 46 verschlossen. Um Kabel durch die Kabeldurchführungen 46 in das Innere des Elektronikaufnahmeraumes 40 führen und dort mit den Anschlussklemmen 44 verbinden zu können, kann der Deckel 14 von dem Zwischenteil 16 gelöst und relativ zu diesem verschwenkt werden. Hierzu ist es erforderlich, die Schrauben 22 und 24 zu lösen. Anschließend kann der Deckel 14 in dem Gelenk 20 um die Schwenkachse S verschwenkt werden.

Der Klemmenkasten 12 weist in einer Ebene quer zu der Längs- bzw. Drehachse X des Pumpenaggregates eine Form auf, in derer sich der Klemmenkasten 12 ausgehend von einer ersten Seite 48 zu einer diametral bzgl. der Längsachse X entgegengesetzt gelegenen Seite 50 verjüngt. Dabei läuft die zweite Seite 50 in einem Kreisbogen aus, welcher sich konzentrisch zur Längsachse X erstreckt. Das Gelenk 20 ist an der verjüngten zweiten Seite 50 angeordnet. Das Gelenk 20 hat in Richtung der Schwenkachse S, um welche der Deckel 14 relativ zu dem Zwischenteil 16 verschwenkbar ist, eine axiale Ausdehnung a, welche weniger als ein Viertel der größten Ausdehnung b des Klemmenkastens in einer Richtung parallel zur Schwenkachse S aufweist. D. h. hier hat das Gelenk 20 entlang seiner Schwenkachse S im Verhältnis zur Ausdehnung b des Klemmkastens 16 und des Deckels 14 eine sehr kurze axiale Länge. Das Gelenk ist darüber hinaus zentral an der zweiten Seite 50, d. h. mittig an dem Klemmenkasten 12 angeordnet.

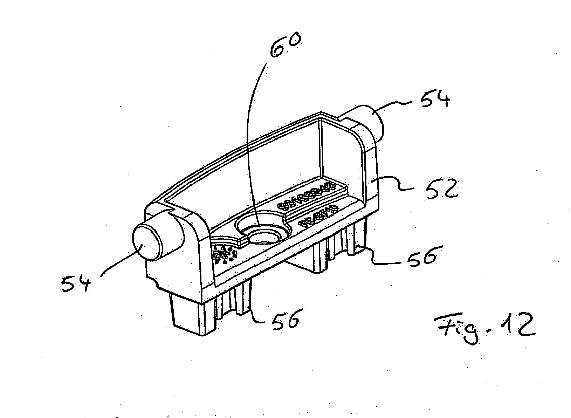

Eine Hälfte des Gelenks 20 wird von einem an dem Deckel 14 angeordneten Trägerelement 52, von welchem in Richtung der Schwenkachse S an zwei entgegengesetzten Seiten zapfenförmige Gelenkbolze 54 vorstehen, gebildet. Die Gelenkbolzen 54 sind mit dem Trägerelement 52 einstückig ausgebildet, wie in Fig. 12 gezeigt. Das Trägerelement 52 ist gegenüber dem Deckel 14 als separates Bauteil ausgebildet und mit diesem über Verbindungszapfen 56, welche an dem Trägerelement 52 ausgebildet ist, sowie eine Schraube 58, welche das Loch 60 in dem Trägerelement 52 durchgreift, verbunden. Das Trägerelement 52 bewirkt, dass die Gelenkbolzen 54 von der dem Zwischenteil 16 zugewandten Stirnseite bzw. Stirnkante des Deckels 14 in axialer Richtung X (bei geschlossenem Deckel) beanstandet sind. Dies ermöglicht beim Schwenken um die Schwenkachse S ein seitliches Ausschwenken des Deckels 14 aus der Umfangskontur des Zwischenteiles 16, sodass eine Kollision des Deckels 14 mit der Stirnseite des Zwischenteils 16, welche ein Verschwenken verhindern würde, nicht auftritt.

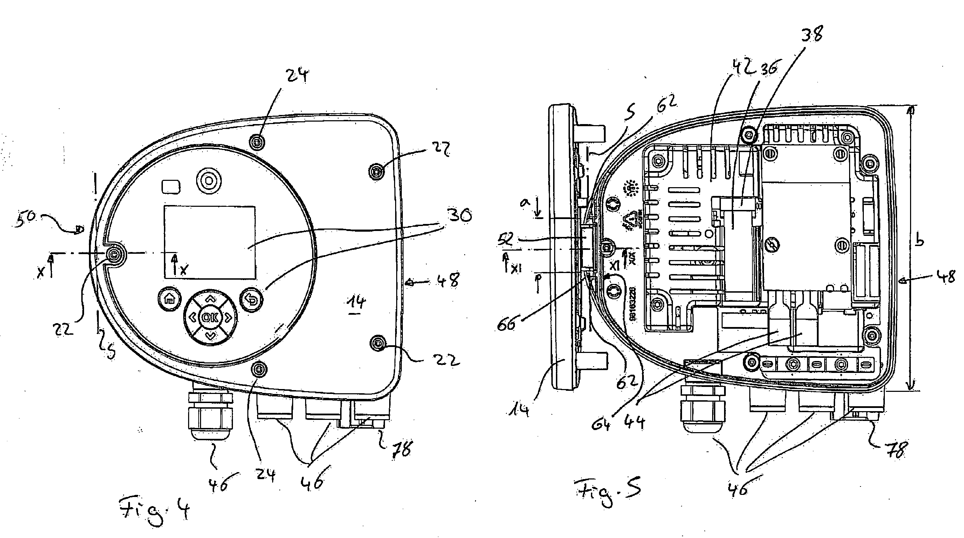

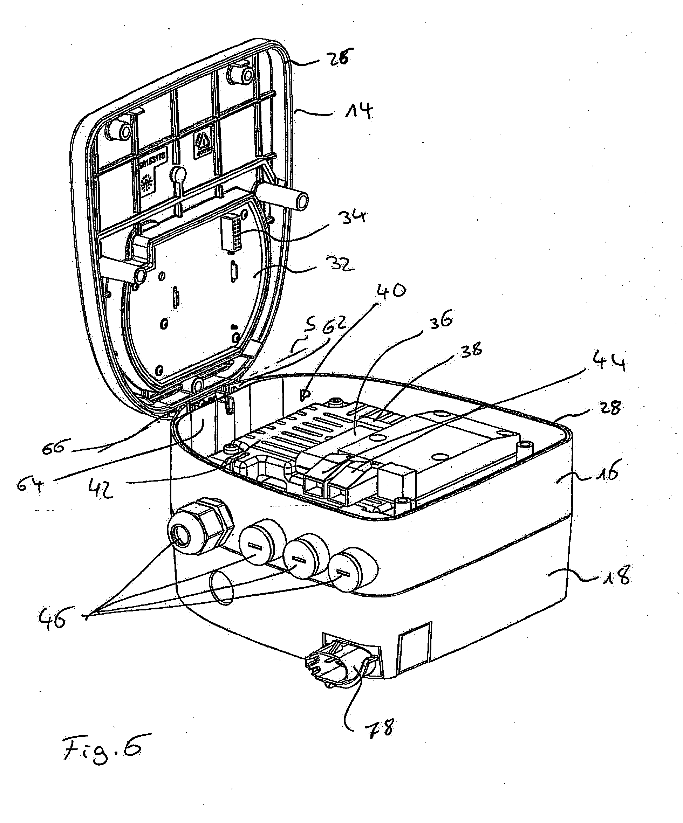

Die Gelenkbolzen 54 sind jeweils in einer Gelenkaufnahme 62 in dem Zwischenteil 16, welche die zweite Hälfte des Gelenks bildet, drehbar gelagert. Die Gelenkaufnahmen 62 sind in dem Zwischenteil 16 zwischen einem im Bereich des Gelenkes 50 ausgebildeten inneren Wandungselement 64 und einem äußeren Wandungselement 66 ausgebildet. Das äußere Wandungselement 66 bildet dabei die Außenkontur bzw. Außenfläche des Zwischenteils 16 an der zweiten Seite 50. Das innere Wandungselement 64 erstreckt sich sehnenförmig zu dem gekrümmten äußeren Wandungselement 66 bzw. der Außenwandung an der zweiten Seite 50 und begrenzt den ersten Elektronikaufnahmeraum 40 nach außen und zu dem Gelenk 50 hin. Die Stirnseite des inneren Wandungselementes 64 bildet einen Teil einer Dichtfläche 28 und kommt in dichtende Anlage mit der gegenüberliegenden Dichtung 26 an dem Deckel 14. So wird erreicht, dass das Gelenk und insbesondere dessen Gelenkaufnahme 42 außerhalb des ersten Elektronikaufnahmeraumes 40 gelegen sind, sodass dieser vollständig und gedichtet ausgebildet sein kann. Dennoch ist das Gelenk 20 im Inneren des Außenkontur des Klemmenkastens 12, nämlich im Inneren der äußeren Wandungselement 66 gelegen. An der Innenseite des äußeren Wandungselementes 66 sind Rastvorsprünge 68 im Bereich der Gelenkaufnahmen 62 ausgebildet. Die Rastvorsprünge 68 umgreifen bzw. hintergreifen die Gelenkbolzen 64, sodass diese nicht ohne weiteres aus der Gelenkaufnahme 62 entnommen werden können. In dieser Position kann der Deckel aus dem in Fig. 4 gezeigten geschlossenen Zustand in den in Figuren 5 und 6 gezeigten geöffneten Zustand verschwenkt werden. Unterhalb der Rastvorsprünge 68 in den Gelenkaufnahmen 62 sind in dem äußeren Wandungselement 66 Löcher 67 ausgebildet, welche dem Entkernen nach dem Spritzgießen dienen.

Das Innere Wandungselement 24 und das äußere Wandungselement 66 sind in einer Richtung quer zur Schwenkachse S und insbesondere auch quer zur Längsachse X voneinander beabstandet. Dabei nimmt der Abstand aufgrund der Krümmung des äußeren Wandelementes 66 zu den Außenseiten hin ab und das äußere Wandungselement 66 und das innere Wandungselement 64 gehen dort ineinander über bzw. sind dort miteinander verbunden.

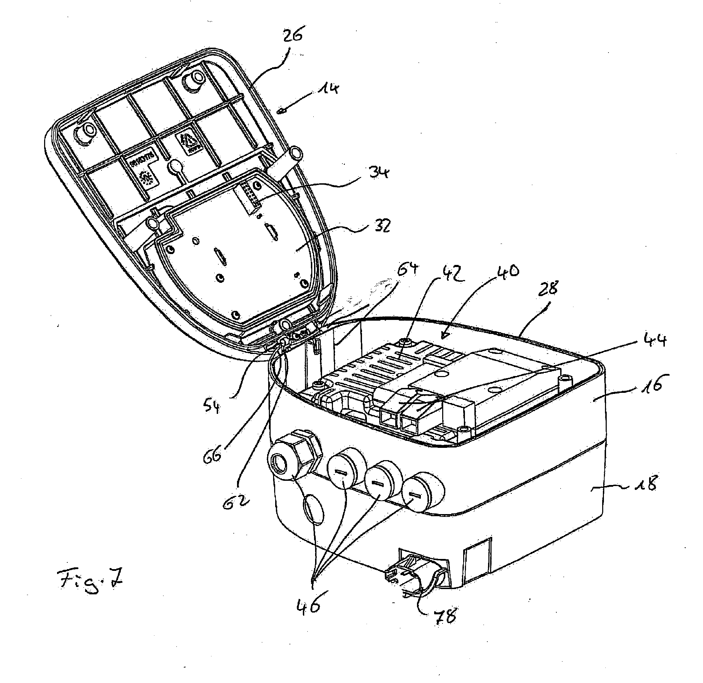

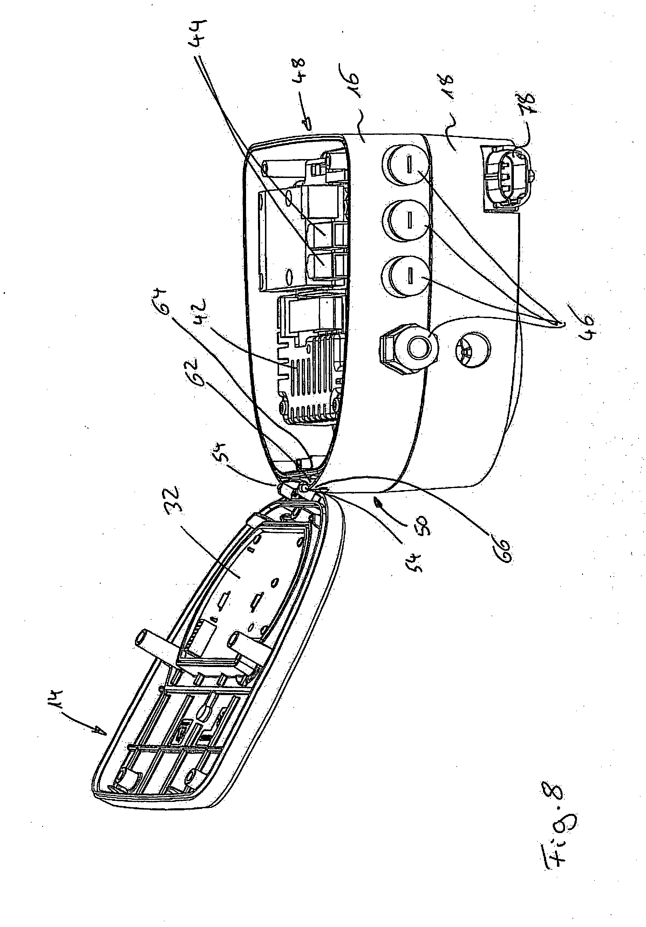

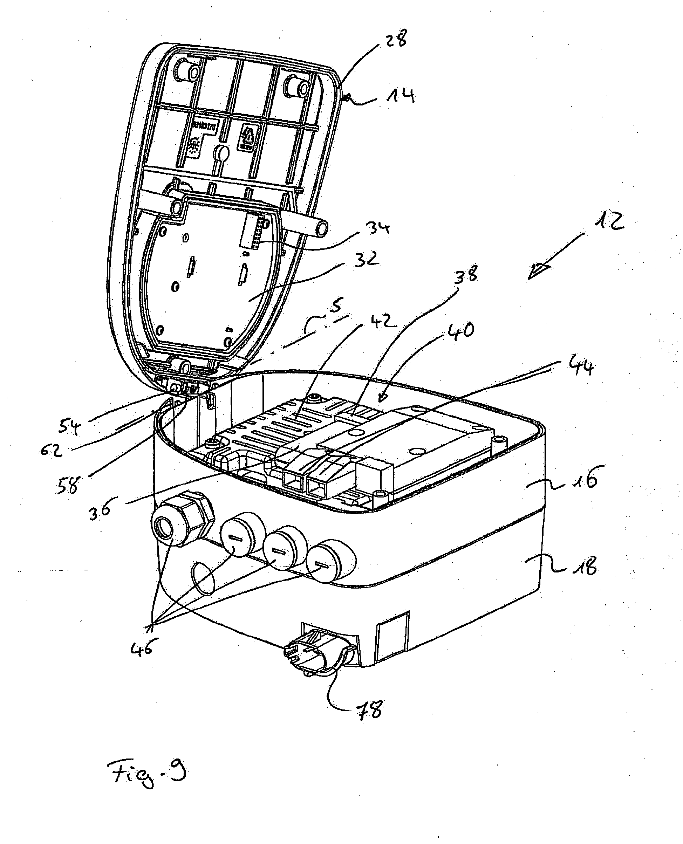

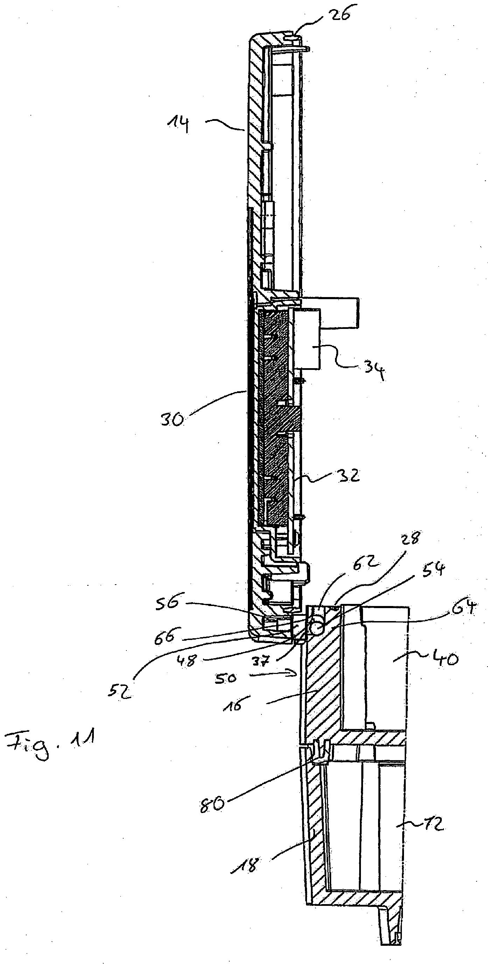

Das äußere Wandungselement 66 mit den Rastvorsprüngen 68 ist nach außen elastisch verformbar, sodass die Rastvorsprünge 68 von den Gelenkbolzen 54 außer Eingriff treten können und die Gelenkaufnahme 62 soweit aufweiten können, dass die Gelenkbolzen 64 aus den Gelenkaufnahmen 62 entnehmbar sind. So kann der Deckel 14 vollständig von dem Zwischenteil 16 getrennt werden, indem im Gelenk 20 die beiden Gelenkhälften, nämlich die Gelenkbolzen 54 auf der einen Seite und die Gelenkaufnahmen 62 auf der anderen Seite, ausgehakt bzw. voneinander getrennt werden. Zum vollständigen Lösen muss dann noch die elektrische Verbindung des Verbindungskabels 36 durch Lösen des Verbindungssteckers 38 von dem Stecker 34 getrennt werden. So kann dann ein vollständig offener und freier Zugang zum Inneren des ersten Elektronikaufnahmeraumes 40 geschaffen werden. Insbesondere ist dies von Vorteil, wenn der Deckel nicht vollständig, wie in Fig. 5, 6 und 11 gezeigt, in eine im Wesentlichen um 90° um die Schwenkachse S verschwenkte Position aufgeklappt werden kann. Dies kann je nach Einbaulage des Pumpenaggregates verhindert sein. Z. B. in diesem Fall kann der Deckel vollständig aus der Gelenkaufnahme 62 entnommen werden. Dies kann entweder dadurch geschehen, dass der Deckel über die in Fig. 5, 6 und 11 gezeigte 90°-Schwenkposition hinaus aufgeschwenkt wird. Dann schlägt der Deckel 14 mit seiner Umfangskante an der Außenseite des Zwischenteiles 16 an und das Gelenk 14 wird ausgehebelt, wie anhand der Figuren 7 und 8 gezeigt ist. Dort ist gezeigt, wie die Gelenkbolzen 54 aus der Gelenkaufnahme 62 austreten. Die axial kurze Ausgestaltung des Gelenkes ermöglicht darüber hinaus jedoch auch ein Aushebeln bzw. Aushaken des Gelenkes 20 in einer Richtung quer bzw. normal zu der üblichen Schwenkrichtung um die Schwenkachse S wie in Fig. 9 gezeigt ist. Dazu wird der Deckel 14 im Wesentlichen in der Ebene seiner Oberfläche verschwenkt, wobei zunächst einer der beiden Gelenkbolzen 54 aus der zugehörigen Gelenkaufnahme 62 außer Eingriff tritt. Anschließend kann auch der zweite Gelenkbolzen 54 aus seiner Gelenkausnahme 62 herausgezogen werden.

Zum Wiederbefestigen des Deckels 14 an dem Zwischenteil 16 können die Gelenkbolzen 54 unter elastischer Verformung des äußeren Wandungselementes 66 mit den Rastvorsprüngen 68 wieder in die Gelenkaufnahmen 62 eingeführt bzw. eingeschnappt werden.

Die elastische Bewegbarkeit des äußeren Wandungselementes 66 wird durch den Ausschnitt 70 in dem äußeren Wandungselement 66 an der Seite 50 begünstigt. Der Ausschnitt 70 dient dazu, dass das Trägerelement 52 beim Aufklappen des Deckels 14 nach außen aus der Außenkontur,des Klemmenkastens 12 heraus verschwenken kann. Die Rastvorsprünge 68 sind an der Innenseite des äußeren Wandelementes 66 seitlich angrenzend an diesen Ausschnitt 70 gelegen. So können sich die an den Ausschnitt 70 angrenzenden freien Enden des äußeren Wanduungselementes 66 leicht nach außen elastisch verformen.

Da die Gelenkaufnahmen 62 innenliegend im Zwischenraum zwischen dem äußeren Wandelement 66 und dem inneren Wandelement 64 gelegen sind, ist die Schwenkachse S ebenfalls im Inneren der Außenkontur des Zwischenteils 16 gelegen. Um das Verschwenken des Deckels 14 dabei zu ermöglichen, ist der oben beschriebene Abstand der Gelenkbolzen 54 von der Stirnkante des Deckels 14, welche dem Zwischenteil 16 zugewandt ist, vorgesehen, welche durch das Trägerelement 52 geschaffen wird.

Das Unterteil 18 des Klemmenkastens 12 definiert einen zweiten Elektronikaufnahmeraum 72, in welchem eine Leiterplatte 74 angeordnet ist, welche elektronische Bauelemente zur Steuerung des Antriebsmotors des Pumpenaggregates trägt. Die Leiterplatte 74 weist elektrische Anschlusskontakte 76 auf, welche dazu dienen, die Leiterplatte 74 elektrisch mit den Elektronikkomponenten 42 in dem Zwischenteil 16 zu verbinden. Im Boden des Zwischenteils kann entsprechend einen Ausnehmung vorgesehen sein, durch welche sich die elektrischen Anschlusskontakte 76 hindurch erstrecken können. An dem Unterteil 18 ist darüber hinaus ein Anschlussstecker 78 angeordnet, welcher dem elektrischen Netzanschluss des Pumpenaggregates dient. In dem zweiten Elektronikaufnahmeraum 72 in dem Unterteil 18 sind diejenigen elektrischen bzw. elektronischen Bauteile angeordnet, welche bei der normalen Installation und bei der normalen Nutzung des Pumpenaggregates nicht zugänglich sein müssen. Dazu bleibt der zweite Elektronikaufnahmeraum 72 verschlossen, indem der Zwischenteil 16 auf das Unterteil 18 aufgesetzt ist. Das Unterteil 18 liegt dabei umfänglich an der Stirnkante der Umfangswandung des Zwischenteils 16 an, wobei an der Umfangskante des Zwischenteils 16 eine Dichtung 80 ausgebildet ist und insbesondere angegossen ist, welche die Schnittstelle zwischen dem Zwischenteil 16 und dem Unterteil 18 nach außen abdichtet. Das Zwischenteil 16 und das Unterteil 18 werden lösbar über Rastelemente 82 aneinander gehalten. Zusätzlich erfolgt eine Sicherung über die Schrauben 24, welche den Deckel 14 fixieren. Die Schrauben 24 greifen in säulenartige Schraubaufnahmen 84 ein, welche an dem Unterteil 18 ausgebildet sind. Die Schraubaufnahmen 84 erstrecken sich von dem Unterteil 18 weg in das Innere des Zwischenteils 16 hinein und können so die Schrauben 24 aufnehmen. Die Schrauben 24 und die Schraubaufnahmen 84 durchgreifen somit das Zwischenteil 16 in axialer Richtung X.

### Bezugszeichenliste

- 2: Pumpengehäuse
- 4: Klemmring
- 6: Statorgehäuse
- 8: Rotor
- 10: Spaltrohr
- 12: Klemmenkasten
- 14: Deckel
- 16: Zwischenteil
- 18: Unterteil
- 20: Gelenk
- 22, 24: Schrauben
- 26: Dichtung
- 28: Dichtfläche
- 30: Bedien- und Anzeigeelemente
- 32: Leiterplatte
- 34: Stecker
- 36: Verbindungskabel
- 37: Löcher
- 38: Verbindungsstecker
- 40: erster Elektronikaufnahmeraum
- 42: Elektronikkomponenten
- 44: Anschlussklemmen
- 46: Kabeldurchführungen
- 48: erste Seite
- 50: zweite Seite
- 52: Trägerelement
- 54: Gelenkbolzen
- 56: Verbindungszapfen
- 58: Schraube
- 60: Loch
- 62: Gelenkaufnahmen
- 64: inneres Wandungselement
- 66: äußeres Wandungselement
- 68: Rastvörsprünge
- 70: Ausschnitt
- 72: zweiter Elektronikaufnahmeraum
- 74: Leiterplatte
- 76: elektrische Anschlusskontakte
- 78: Anschlussstecker
- 80: Dichtung
- 82: Rastelemente
- 84: Schraubenaufnahmen

- X: Drehachse
- S: Schwenkachse
- a: Ausdehnung des Gelenkes 20 entlang der Schwenkachse S
- b: größte Ausdehnung des Klemmenkastens 12 in Richtung der Schwenkachse S

## Patentansprüche

1. Pumpenaggregat mit einem Klemmenkasten (12), welcher zumindest einen ersten (14) und einen zweiten (16) Gehäuseteil aufweist, welche über zumindest ein Gelenk (20) schwenkbar miteinander verbunden sind,
**dadurch gekennzeichnet, dass**
das Gelenk (20) bezogen auf die größte Ausdehnung (b) des Klemmenkastens (12) in der Richtung parallel zur Schwenkachse (S) des Gelenkes (20) in einem Zentralbereich des Klemmenkastens angeordnet ist in Richtung seiner Schwenkachse (S) eine Ausdehnung (a) hat, welche weniger als der Hälfte der größten Ausdehnung (b) des Klemmenkastens (12) in Richtung parallel zu dieser Schwenkachse (S) entspricht.

2. Pumpenaggregat nach Anspruch 1, **dadurch gekennzeichnet, dass** das Gelenk (20) bezogen auf die größte Ausdehnung (b) des Klemmenkastens (12) in der Richtung parallel zur Schwenkachse (S) des Gelenkes (20) in einem Zentralbereich des Klemmenkastens (12) mittig angeordnet ist.

3. Pumpenaggregat nach Anspruch 1 oder 2, **dadurch gekennzeichnet, dass** Gelenk (20) in Richtung seiner Schwenkachse (S) eine Ausdehnung (a) hat, welche weniger als einem Drittel und vorzugsweise weniger als einem Viertel der größten Ausdehnung (b) des Klemmenkastens (12) in Richtung parallel zu dieser Schwenkachse (S) entspricht.

4. Pumpenaggregat nach einem der vorangehenden Ansprüche, **dadurch gekennzeichnet, dass** das Gelenk (20) an einer Seitenfläche des Klemmenkastens gelegen ist, welche sich parallel zur Schwenkachse (S) des Gelenkes (20) erstreckt; oder das Gelenk (20) an einer gekrümmten Seitenfläche (50) derart angeordnet ist, dass sich die Schwenkachse (S) parallel zu einer Tangente an die Seitenfläche (50) erstreckt.

5. Pumpenaggregat nach einem der vorangehenden Ansprüche, **dadurch gekennzeichnet, dass** das Gelenk (20) derart angeordnet ist, dass sich seine Schwenkachse (S) zu den Seitenflächen oder Seitenkanten des Klemmenkastens (12) gewinkelt erstreckt.

6. Pumpenaggregat nach einem der vorangehenden Ansprüche, **dadurch gekennzeichnet, dass** sich der Klemmenkasten (12) zu einer Seite (50) hin verjüngt, wobei das Gelenk (20) im verjüngten Bereich des Klemmenkastens (12) angeordnet ist.

7. Pumpenaggregat nach einem der vorangehenden Ansprüche, **dadurch gekennzeichnet, dass** das Gelenk (20) zumindest einen an dem ersten Gehäuseteil (14) des Klemmenkastens (12) befestigten Gelenkbolzen (54) aufweist, welche in eine Gelenkaufnahme (62) eingreift, welche an dem zweiten Gehäuseteil (16) des Klemmenkastens (12) angeordnet ist.

8. Pumpenaggregat nach Anspruch 7, **dadurch gekennzeichnet, dass** die Gelenkaufnahme (62) zumindest ein Rastelement (68) aufweist, welches den Gelenkbolzen (54) lösbar in der Gelenkaufnahme (62) fixiert.

9. Pumpenaggregat nach Anspruch 7 oder 8, **dadurch gekennzeichnet, dass** das Gelenk (20) zwei voneinander beabstandete Gelenkbolzen (54) aufweist, welche jeweils in einer Gelenkaufnahme (62) an dem zweiten Gehäuseteil (16), vorzugsweise lösbar, fixiert sind.

10. Pumpenaggregat nach einem der Ansprüche 7 bis 9, **dadurch gekennzeichnet, dass** das zweite Gehäuseteil (16) zumindest in einem Abschnitt seiner Außenwand ein inneres Wandungselement (64) und ein von diesem beabstandetes äußeres Wandungselement (66) aufweist, wobei die Gelenkaufnahme (62) in einem Freiraum zwischen dem inneren (64) und dem äußeren (66) Wandungselement gelegen ist.

11. Pumpenaggregat nach Anspruch 10, **dadurch gekennzeichnet, dass** zumindest ein den Gelenkbolzen (54) in der Gelenkaufnahme (62) fixierendes Rastelement (68) an dem äußeren Wandungselement (66) angeordnet ist, und das äußere Wandungselement (66) derart elastisch verformbar ausgebildet ist, dass durch elastische Verformung des äußeren Wandungselementes (66) das Rastelement (68) von dem Gelenkbolzen (54) außer Eingriff bringbar ist.

12. Pumpenaggregat nach Anspruch 10 oder 11, **dadurch gekennzeichnet, dass** das innere Wandungselement (64) einen Elektronikaufnahmeraum (40) des Klemmenkastens (12) begrenzt und der erste Gehäuseteil (14) vorzugsweise gegenüber dem inneren Wandungselement (64) abgedichtet ist.

13. Pumpenaggregat nach einem der Ansprüche 10 bis 12, **dadurch gekennzeichnet, dass** das äußere Wandungselement (66) gekrümmt ausgebildet ist und das innere Wandungselement (64) sich sehnenförmig zu dem äußeren Wandelement (66) erstreckt.64

14. Pumpenaggregat nach einem der vorangehenden Ansprüche, **dadurch gekennzeichnet, dass** das Gelenk (20) zumindest einen Gelenkbolzen (54) aufweist, welcher an einem Trägerelement (52) ausgebildet ist, welches mit dem ersten Gehäuseteil (14) des Klemmenkastens (12) kraft- form- und/oder stoffschlüssig verbunden ist.

15. Pumpenaggregat nach einem der vorangehenden Ansprüche, **dadurch gekennzeichnet, dass** der erste Gehäuseteil (14) des Klemmenkastens (12) ein Deckel ist.

16. Pumpenaggregat nach einem der vorangehenden Ansprüche, **dadurch gekennzeichnet, dass** der erste (14) und der zweite (16) Gehäuseteil zusätzlich zu dem Gelenk über Verbindungselemente, insbesondere Schrauben (22, 24) lösbar aneinander fixiert sind.

17. Pumpenaggregat nach einem der vorangehenden Ansprüche, **dadurch gekennzeichnet, dass** der Klemmenkasten (12) einen dritten Gehäuseteil (18) aufweist, welcher, insbesondere über zumindest ein Rastelement (82), lösbar mit dem zweiten Gehäuseteil (16) verbunden ist.

18. Pumpenaggregat nach Anspruch 17, **dadurch gekennzeichnet, dass** zumindest ein lösbares Verbindungselement (24) vorgesehen ist, welches den ersten (14), den zweiten (16) und den dritten (18) Gehäuseteil miteinander verbindet.

## Claims

1. A pump assembly with a terminal box (12) which comprises at least one first (14) and a second (16) housing part, which are pivotably connected to one another via at least one joint (20),
**characterised in that**
the joint (20) with respect to the greatest extension (b) of the terminal box (12) in the direction parallel to the pivot axis (S) of the joint (20), is arranged in a central region of the terminal box in the direction of its pivot axis (S) has an extension (a) which corresponds to less than half of the greatest extension (b) of the terminal box (12) in the direction parallel to this pivot axis (S).

2. A pump assembly according to claim 1, **characterised in that** the joint (20) with respect to the greatest extension (b) of the terminal box (12) in the direction parallel to the pivot axis (S) of the joint (20), is arranged in a central region of the terminal box (12), in the middle.

3. A pump assembly according to claim 1 or 2, **characterised in that** the joint (20) in the direction of its pivot axis (S) has an extension (a) which is less than a third and preferably less than a quarter of the greatest extension (b) of the terminal box (12) in the direction parallel to this pivot axis (S).

4. A pump assembly according to one of the preceding claims, **characterised in that** the joint (20) is situated on a side surface of the terminal box which extends parallel to a pivot axis (S) of the joint (20), or the joint (20) is arranged on a curved side surface (50) in a manner such that the pivot axis (S) extends parallel to a tangent to the side surface (50).

5. A pump assembly according to one of the preceding claims, **characterised in that** the joint (20) is arranged in a manner such that its pivot axis (S) extends angled to the side surfaces or side edges of the terminal box (12).

6. A pump assembly according to one of the preceding claims, **characterised in that** the terminal box (12) tapers to one side (50), wherein the joint (20) is arranged in the tapered region of the terminal box (12).

7. A pump assembly according to one of the preceding claims, **characterised in that** the joint (20) comprises at least one joint bolt (54) which is fastened on the first housing part (14) of the terminal box (12) and which engages into a joint receiver (62) arranged on the second housing part (16) of the terminal box (12).

8. A pump assembly according to claim 7, **characterised in that** the joint receiver (62) comprises at least one locking element (68) which fixes the joint bolt (54) in the joint receiver (62) in a releasable manner.

9. A pump assembly according to claim 7 or 8, **characterised in that** the joint (20) comprises two joint bolts (54) which are distanced to one another and which are fixed, preferably in a releasable manner, in each case in a joint receiver (62) on the second housing part (16).

10. A pump assembly according to one of the claims 7 to 9, **characterised in that** the second housing part (16) at least in a section of its outer wall comprises an inner wall element (64) and an outer wall element (66) which is distanced to this, wherein the joint receiver (62) is situated in a free space between the inner (64) and the outer (66) wall element.

11. A pump assembly according to claim 10, **characterised in that** at least one locking element (68) which fixes the joint bolt (54) in the joint receiver (62) is arranged on the outer wall element (66), and the outer wall element (66) is designed elastically deformable in a manner such that the locking element (68) can be disengaged from the joint bolt (54) by way of elastic deformation of the outer wall element (66).

12. A pump assembly according to claim 10 or 11, **characterised in that** the inner wall element (64) delimits an electronics receiving space (40) of the terminal box (12), and the first housing part (14) is preferably sealed with respect to the inner wall element (64).

13. A pump assembly according to one of the claims 10 to 12, **characterised in that** the outer wall element (66) is designed in a curved manner, and the inner wall element (64) extends in a chordlike manner to the outer wall element (66).

14. A pump assembly according to one of the preceding claims, **characterised in that** the joint (20) comprises at least one joint bolt (54) which is formed on a carrier element (52) connected to the first housing part (14) of the terminal box (12) with a non-positive, positive, and/or material fit.

15. A pump assembly according to one of the preceding claims, **characterised in that** the first housing part (14) of the terminal box (12) is a cover.

16. A pump assembly according to one of the preceding claims, **characterised in that** the first (14) and the second (16) housing part additionally to the joint are releasably fixed on one another via connection elements, in particular screws (22, 24).

17. A pump assembly according to one of the preceding claims, **characterised in that** the terminal box (12) comprises a third housing part (18) which is releasably connected to the second housing part (16), in particular via at least one locking element (82).

18. A pump assembly according to claim 17, **characterised in that** at least one releasable connection element (24) is provided, which connects the first (14), the second (16) and the third (18) housing part to one another.

## Revendications

1. Groupe motopompe avec un boîtier de raccordement (12) qui comprend au moins une première partie (14) et une deuxième partie (16) de boîtier qui sont reliées l'une à l'autre de manière pivotante par au moins une articulation (20),
**caractérisé en ce que**
l'articulation (20) est disposée, par rapport à la plus grande dimension (b) du boîtier de raccordement (12), dans la direction parallèle à l'axe de pivotement (S) de l'articulation (20) dans une zone centrale du boîtier de raccordement et a une étendue (a) dans la direction de son axe de pivotement (S) qui correspond à moins que la moitié de la dimension la plus grande (b) du boîtier de raccordement (12) dans la direction parallèle à cet axe de pivotement (S).

2. Groupe motopompe selon la revendication 1, **caractérisé en ce que** l'articulation (20) est disposée, par rapport à la plus grande dimension (b) du boîtier de raccordement (12), dans la direction parallèle à l'axe de pivotement (S) de l'articulation (20) dans une position médiane dans une zone centrale du boîtier de raccordement (12).

3. Groupe motopompe selon la revendication 1 ou 2, **caractérisé en ce que** l'articulation (20) a une étendue (a) dans la direction de son axe de pivotement (S) qui correspond à moins qu'un tiers et de préférence à moins qu'un quart de la dimension la plus grande (b) du boîtier de raccordement (12) dans la direction parallèle à cet axe de pivotement (S).

4. Groupe motopompe selon l'une des revendications précédentes, **caractérisé en ce que** l'articulation (20) est située sur une surface latérale du boîtier de raccordement qui s'étend parallèlement à l'axe de pivotement (S) de l'articulation (20) ; ou que l'articulation (20) est disposée sur une surface latérale courbée (50) de façon que l'axe de pivotement (S) s'étende parallèlement à une tangente à la surface latérale (50).

5. Groupe motopompe selon l'une des revendications précédentes, **caractérisé en ce que** l'articulation (20) est disposée de façon que son axe de pivotement (S) s'étende sous un angle par rapport aux surfaces latérales ou bords latéraux du boîtier de raccordement (12).

6. Groupe motopompe selon l'une des revendications précédentes, **caractérisé en ce que** le boîtier de raccordement (12) se rétrécit vers un côté (50), l'articulation (20) étant disposée dans la zone rétrécie du boîtier de raccordement (12).

7. Groupe motopompe selon l'une des revendications précédentes, **caractérisé en ce que** l'articulation (20) comprend au moins un axe d'articulation (54) fixé sur la première partie (14) du boîtier de raccordement (12) qui s'engage dans une réception d'articulation (62) qui est disposée sur la deuxième partie (16) du boîtier de raccordement (12).

8. Groupe motopompe selon la revendication 7, **caractérisé en ce que** la réception d'articulation (62) comprend au moins un élément d'encliquetage (68) qui fixe l'axe d'articulation (54) de manière amovible dans la réception d'articulation (62).

9. Groupe motopompe selon la revendication 7 ou 8, **caractérisé en ce que** l'articulation (20) comprend deux axes d'articulation (54) espacés l'un de l'autre, qui sont fixés chacun de préférence de manière amovible dans une réception d'articulation (62) sur la deuxième partie de boîtier (16).

10. Groupe motopompe selon l'une des revendications 7 à 9, **caractérisé en ce que** la deuxième partie (16) du boîtier de raccordement comprend au moins dans une zone de sa paroi extérieure un élément de paroi intérieur (64) et un élément de paroi extérieur (66) espacé de ce dernier, la réception d'articulation (62) étant située dans un espace libre entre les éléments de paroi intérieur (64) et extérieur (66).

11. Groupe motopompe selon la revendication 10, **caractérisé en ce qu'**un élément d'encliquetage (68) fixant le ou les axes d'articulation (54) dans la réception d'articulation (62) est disposé sur l'élément de paroi extérieur (66) et **en ce que** l'élément de paroi extérieur (66) est élastiquement déformable de façon que par une déformation élastique de l'élément de paroi extérieur (66), l'élément d'encliquetage (68) peut être séparé de l'axe d'articulation (54).

12. Groupe motopompe selon la revendication 10 ou 11, **caractérisé en ce que** l'élément de paroi intérieur (64) délimite un espace de réception d'électronique (40) du boîtier de raccordement (12) et **en ce que** la première partie (14) du boîtier de raccordement est de préférence étanche par rapport à l'élément de paroi intérieur (64).

13. Groupe motopompe selon l'une des revendications 10 à 12, **caractérisé en ce que** l'élément de paroi extérieur (66) a une forme courbe et **en ce que** l'élément de paroi intérieur (64) s'étend par rapport à l'élément de paroi extérieur (66) sous la forme d'une corde.

14. Groupe motopompe selon l'une des revendications précédentes, **caractérisé en ce que** l'articulation (20) comprend au moins un axe d'articulation (54) qui est formé sur un élément de support (52) qui est relié à la première partie (14) du boîtier de raccordement (12) en ce qui concerne la transmission d'effort, la forme et/ou la matière.

15. Groupe motopompe selon l'une des revendications précédentes, **caractérisé en ce que** la première partie (14) du boîtier de raccordement (12) est un couvercle.

16. Groupe motopompe selon l'une des revendications précédentes, **caractérisé en ce que** la première (14) et la deuxième (16) parties du boîtier sont fixées l'une à l'autre de manière amovible, en plus de l'articulation, par des éléments de liaison, notamment des vis (22,24).

17. Groupe motopompe selon l'une des revendications précédentes, **caractérisé en ce que** le boîtier de raccordement (12) comporte une troisième partie (18) de boîtier qui est attachée à la deuxième partie de boîtier (16) de manière amovible, notamment à l'aide d'au moins un élément d'encliquetage (82)

18. Groupe motopompe selon la revendication 17, **caractérisé en ce qu'**il est prévu au moins un élément de liaison (24) amovible qui relie la première (14), la deuxième (16) et la troisième (18) parties de boîtier les unes aux autres.
